# EUROPEAN PATENT SPECIFICATION

(11) **EP 1 026 902 B1**
(45) Date of publication and mention of the grant of the patent: **14.04.2010**
(21) Application number: 00101745.8
(22) Date of filing: 28.01.2000
(51) Int. Cl.: H04N 9/79

(54) **Picture reproduction method**
Bildwiedergabeverfahren
Procédé de reproduction d'image

(30) Priority: 08.02.1999 DE 19904987
(43) Date of publication of application: 09.08.2000
(73) Proprietor: Thomson Licensing, 92443 Issy-les-Moulineaux Cedex (FR)
(72) Inventor: Kochale, Axel, 31832 Springe (DE)
(74) Representative: Wördemann, Hermes

(56) References cited:
- EP-A- 0 888 018
- US-A- 4 730 222

## Description

The invention relates to a method for the reproduction of coded pictures.

### Prior art

On a video CD, as described for example in EP 0 706 282, the video data for moving pictures are stored in a standard resolution, which, e.g. for the PAL system, is 352 * 288 pixels at a frame frequency of 25 Hz. The video data for still pictures can be stored either with this resolution or with an increased resolution of 704 * 576 for the PAL system. Consequently, depending on the specification, for still pictures on a video CD, there may also be a data stream having a mixed resolution in addition to a data stream having a standard resolution.

More detailed specifications regarding the stored data are stored in a separate list, which have to be read out during reproduction by a player. This process requires special manipulation by the player by means of suitable software.

In a similar technical area, EP 0 888 018 discloses an optical disk in which stereoscopic videos and high-quality videos are recorded. Two video streams are recorded on the optical disk, one for the left eye and one for the right eye. When the optical disk is played back in an optical disk reproducing device for 3D video, a stereoscopic video is reproduced from both video streams. In an ordinary 2D disk reproducing apparatus, only a 2D video, i.e. one of both streams, is reproduced. The optical disk is hence compatible to older video reproducing devices.

US 4 730 222 discloses a video reproduction device (VCR) capable of reproducing video images of a standard resolution (NTSC, PAL, SECAM,...) and of a high resolution (TDM, time divisional multiplex). To select the video image format, the user has to press a button on a remote control.

### Invention

The invention is based on the object of specifying a simple method for the reproduction of pictures having different resolutions.

The invention is achieved by means of the features specified in Claim 1.

Advantageous developments are reproduced in the sub-claims.

According to the invention, a method for the reproduction of coded pictures from a data stream of coded pictures having a first resolution and a second resolution comprises searching through the data stream for pictures of said first an second resolutions, said searching comprising the steps of :
identifying pictures having said first resolution;
either skipping said pictures identified with said first resolution or storing said pictures identified with said first resolution in a buffer;
determining pictures having said second resolution and reading said pictures for further processing; and
in case no pictures having said second resolution are found in the data stream either jumping back within the data stream to the beginning of a picture having said first resolution and reading this picture or reading a stored picture having said first resolution from the buffer for further processing.

According to the invention, during the reproduction of pictures, in particular still pictures, a preliminary analysis is carried out which searches through the data stream present on a storage medium, e.g. a video CD or a magnetic recording medium, for different resolutions. Only so-called I frames are analysed in this case. These are coded pictures whose contents are based exclusively on the information in a picture. If an I frame having an increased resolution has been found, it is read immediately from the storage medium for further processing.

However, if only I frames having a standard resolution are found, two different decoding steps are afforded. On the one hand, a jump can be initiated back to the beginning of an I frame having a standard resolution or the data having a standard resolution are read out during the preliminary analysis and buffer-stored in a buffer.

Separate checking as to whether a still picture to be reproduced is stored with an increased resolution on the video CD is advantageously avoided by the inventive method. The method is preferably employed for displaying menu contents.

### Drawings

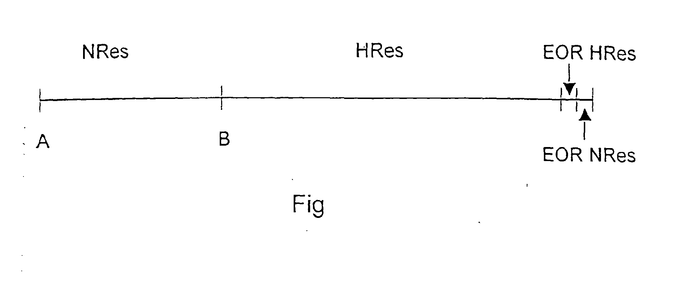

Furthermore, an exemplary embodiment of the inventive method is described with reference to the drawing.

The figure shows a data stream having a mixed resolution. An I frame having a standard resolution is illustrated in a first section NRes and an I frame having an increased resolution is illustrated in a second section HRes. It is also possible for sections having a plurality of successive I frames having a standard resolution, followed by a plurality of successive I frames having an increased resolution, to be stored on a video CD.

The conclusion of one or more I frames having an increased resolution is followed by one or more identification bytes EOR NRes, EOR HRes. Each I frame starts with an input code A, B, which identifies the type of the associated I frame. In the preliminary analysis mode, the system recognizes the type of the subsequent I frame at the input mode. If an I frame having a standard resolution is involved, it is either ignored or read into a buffer. If an I frame having an increased resolution is involved, it is read out for further processing. Should no I frame having an increased resolution follow the I frame having a standard resolution, either a jump is initiated back to the beginning of an I frame having the standard resolution or, if the desired I frame is stored in a buffer, it is read from the latter for further processing.

## Claims

1. Method for the reproduction of coded pictures from a data stream of coded pictures having a first resolution and a second resolution, comprising
searching through the data stream for pictures of said first and second resolutions, said searching comprising the steps of :
identifying pictures (NRes) having said first resolution;
either skipping said pictures (NRes) identified with said first resolution or storing said pictures (NRes) identified with said first resolution in a buffer;
determining pictures (HRes) having said second resolution and reading said pictures (HRes) for further processing; and
in case no pictures (HRes) having said second resolution are found in the data stream either jumping back within the data stream to the beginning of a picture (NRes) having said first resolution and reading this picture (NRes) or reading a stored picture (NRes) having said first resolution from the buffer for further processing.

2. Method according to claim 1, **wherein** said identifying step comprises evaluating picture resolution identification codes (A, B) assigned to said coded pictures.

3. Method according to claim 1 or 2, **wherein** said pictures (HRes) having said second resolution have an increased resolution relative to said pictures (NRes) having said first resolution.

4. Method according to anyone of the preceding claims, wherein said coded pictures are read from an optical or a magnetic storage medium.

## Patentansprüche

1. Verfahren zur Wiedergabe kodierter Bilder eines Datenstroms von kodierten Bildern mit einer ersten Auflösung und einer zweiten Auflösung, **umfassend**
Durchsuchen des Datenstroms nach Bildern der ersten und der zweiten Auflösing, wobei das Durchsuchen die folgenden Schritte umfasst:
Identifizieren von Bildern (NRes) mit der ersten Auflösung;
entweder Überspringen der identifizierten Bilder (NRes) mit der ersten Auflösung oder Speichern der identifizierten Bilder (NRes) mit der ersten Auflösung in einem Puffer;
Bestimmen von Bildern (HRes) mit der zweiten Auflösung und Auslesen dieser Bilder (HRes) zur weiteren Bearbeitung; und
für den Fall, dass keine Bilder (HRes) mit der zweiten Auflösung im Datenstrom gefunden werden, entweder Zurückspringen innerhalb des Datenstroms zum Anfang eines Bildes (NRes) mit der ersten Auflösung und Auslesen dieses Bildes (NRes) oder Auslesen eines gespeicherten Bildes (NRes) mit der ersten Auflösung aus dem Puffer zur weiteren Bearbeitung.

2. Verfahren nach Anspruch 1, **wobei** der Schritt des Identifizierens ein Auswerten von den kodierten Bildern zugeordneten Identifizierungscodes (A, B) umfasst.

3. Verfahren nach Anspruch 1 oder 2, **wobei** die Bilder (HRes) mit der zweiten Auflösung eine erhöhte Auflösung gegenüber den Bildern (NRes) mit der ersten Auflösung haben.

4. Verfahren nach einem der voranstehenden Ansprüche, **wobei** die Bilder aus einem optischen oder magnetischem Speichermedium ausgelesen werden.

## Revendications

1. Procédé pour la reproduction d'images codées provenant d'un flux de données d'images codées présentant une première résolution et une deuxième résolution, **comprenant**
la recherche, dans le flux de données, d'images desdites première et deuxième résolutions, ladite recherche comprenant les étapes consistant à :
identifier des images (NRes) présentant ladite première résolution ;
soit ignorer lesdites images (NRes) identifiées avec ladite première résolution soit stocker lesdites images (NRes) identifiées avec ladite première résolution dans une mémoire tampon ;
déterminer des images (HRes) présentant ladite deuxième résolution et lire lesdites images (HRes) pour un traitement supplémentaire ; et
dans le cas où aucune image (HRes) présentant ladite deuxième résolution n'est trouvée dans le flux de données, soit effectuer un saut en arrière dans le flux de données vers le début d'une image (NRes) présentant ladite première résolution et lire cette image (NRes) soit lire une image stockée (NRes) présentant ladite première résolution à partir de la mémoire tampon pour un traitement supplémentaire.

2. Procédé selon la revendication 1, **dans lequel** ladite étape d'identification comprend l'évaluation de codes (A, B) d'identification de résolution d'image attribués auxdites images codées.

3. Procédé selon la revendication 1 ou 2, **dans lequel** lesdites images (HRes) présentant ladite deuxième résolution présentent une résolution augmentée par rapport auxdites images (NRes) présentant ladite première résolution.

4. Procédé selon une quelconque des revendications précédentes, **dans lequel** lesdites images codées sont lues à partir d'un support de stockage optique ou magnétique.
